# EUROPEAN PATENT APPLICATION

(11) **EP 3 992 887 A1**
(43) Date of publication of application: **04.05.2022**
(21) Application number: 19935407.7
(22) Date of filing: 11.11.2019
(51) Int. Cl.: G06Q 30/02, G09F 9/30, G09F 13/22

(54) **SHARED SIGNBOARD SERVICE SYSTEM AND METHOD FOR OPERATING SAME**

(30) Priority: 25.06.2019 KR 20190075818; 29.08.2019 KR 20190106686; 06.11.2019 KR 20190140630
(71) Applicant: Panline Co., Ltd, Bundang-gu Seongnam-si, Gyeonggi-do 13506 (KR)
(72) Inventor: YOO, Soo Geun, Seongnam-si, Gyeonggi-do 13618 (KR); BAEK, Jong Chan, Seongnam-si, Gyeonggi-do 13618 (KR); CHO, Kwang Su, Yongin-si, Gyeonggi-do 17094 (KR); NAM, Jung Hoon, Jeonju-si, Jeollabuk-do 54970 (KR)
(74) Representative: López Camba, Emilia
(86) International application number: PCT/KR2019/015282
(87) International publication number: WO 2020/262769

(57) **Abstract**

According to a shared signboard service of the present invention, traditional wall signboards, which are individually installed and independently managed by respective store owners mainly to display a store name, are recreated into network-connected digital shared signboards by fusion with ICT technology, so that a self-advertisement, a third-party advertisement, and public information content can be displayed in addition to displaying a trademark, and multipurpose use is possible. In addition, as a signboard replacement procedure can be implemented only by changing display content, sign replacement costs can be reduced, and environmental problems can be prevented.

## Description

### TECHNICAL FIELD

The present invention relates to a shared signboard service system and a method for operating the same. More specifically, the present invention relates to a shared signboard service system having a shared signboard connected to a network. The shared signboard has a dividable virtual display area associated with advertising revenue distribution. The system supports third-party advertising using a shared signboard with convertible operation modes between signboard and advertising. The system may utilize the shared signboard as a public digital bulletin board connected to external systems such as public data systems.

### BACKGROUND ART

With the advent of the sharing economy, various sharing economy models have emerged, such as car-sharing, home-sharing, and office-sharing. Still, a model of sharing signboard has not yet appeared.

Traditionally, signboards are distinguished from digital billboards. Signboards primarily function as a tradename to indicate the business entity of each store, whereas digital billboards mainly perform advertising functions to inform consumers of information about goods or services. The owner or lessee of a store mostly bears the cost for installing and managing signboard that does not generate monetary revenue other than the advertising effect. However, digital billboards used for billboard advertising, elevator advertising, etc., are installed, owned, and managed by digital advertising media operators. They place advertisements for third parties to generate advertising revenue and distribute the income to the building owners where the digital billboards are placed.

Signboard and digital billboards have in common to communicate information using a predetermined space area. Since legally and customarily, the operators and the posting content have been strictly different, sharing signboards between store owners has been physically challenging to implement and emotionally difficult to accept by people.

Each store owner, such as small businesses and self-employed businesses represented by small and medium-sized businesses, mainly places a signboard at the top of the store to expose their tradename or house brand. To advertise their products and services more specifically, they have to use different advertising media such as standing signboards and placards, resulting in inefficient use of the signboard space at the top of the store.

In addition, it is common to configure and operate the signboard individually at each store, so it is difficult to achieve unity, which harms the aesthetics of the building and is even recognized as environmental pollution. Suppose the store owner is changed due to the suspension or termination of the lease contract. In that case, replacing the signboard is excessive, and the resource waste and environmental problems caused by the obsolete signboard have reached a problematic situation.

Accordingly, alternatives were proposed to prevent investment duplication by digitizing signboards or billboards. As one of them, Korean Patent Publication No. 10-2015-0031506 (Publication Date: March 25, 2015), entitled "Digital Signboard and Billboard System," digitizes signboard or billboards to connect to remote servers and begins the configuration of displaying advertisements entered from user terminals such as computers and tablet PCs on digital billboards. However, without acknowledging the customary differences between signboards and billboards, it merely displayed the contents of the user terminal through a remote display device. It failed to teach a way to effectively separate the function as a signboard and as a billboard and use them complementarily.

### DISCLOSURE OF INVENTION

### PROBLEM TO BE SOLVED BY THE INVENTION

The conventional signboards were installed individually and independently managed by each store owner to display the store's tradename. The present invention is to re-establish the traditional wall signboards with ICT technology to provide a shared digital signboard connected to a network. The purpose of the present invention is to provide a shared signboard service system that can be used multi-purposely by displaying the store's adverting content, third-party advertising content, and public information in addition to the store's tradename or trademark. The shared signboard can replace the signboard replacement procedure by changing the display content only. It can also reduce signboard replacement costs and prevent environmental problems.

In addition, the shared signboard service system can be installed in a regional hot place and utilized for multipurpose uses such as advertising media and digital bulletin boards. Another purpose of the present invention is to convert the signboard space into a profit space with economic value, to create a new market of a new digital outdoor advertising medium, and to provide a shared signboard service as an optimized advertising means for small businesses and self-employed people.

In addition, yet another purpose of the present invention is to provide a shared signboard service that can display signboard or advertising content differently when operating different kinds of businesses over time or period at one store.

### MEANS FOR SOLVING PROBLEM

The shared signboard service system of the present invention comprises: one or more shared signboard units with a predetermined size corresponding to a plurality of individual signboards; a computer for controlling content configured to store display content to be displayed on the shared signboard units and provide the content to the shared signboard units in accordance with a display schedule; and a shared signboard operating server configured to store and edit the display schedule and the display content, including signboard content, advertising content, and bulletin board content, and transmit the edited display content and the display schedule to the computer for controlling content.

The shared signboard service system further comprises an operating DB configured to manage various data used for the operation of the shared signboard service system, and the data includes data on the shared signboard unit, data on the physical installation location of shared signboard such as building data, wall data, floor data, and data on signboard space providers including occupant reference cell (S-cell) data, store owner (lessee) data, and building owner (lessor) data, and advertising content data Including advertising content reference cell (C-cell) data, advertiser data, advertising content data, advertiser campaign data, advertisement execution data, advertising account data and signboard price rating data.

The shared signboard service system further comprises: a store management system provided in each store that provides space to install the shared signboard unit, which is linked with a POS system in the store to transmit business status data required for the provision of shared signboard service to the shared signboard operating server; wherein the transmission of data between the store management system and the shared signboard operating server is performed through a web application server, and wherein the data of the store management system required for the provision of the shared signboard service is managed by the shared signboard operating server.

Otherwise, the computer for the controlling content provided in each store that provides space to install the shared signboard unit, which is linked with a POS system in the store to generate and manage the store's own advertising content data and business status data required for the provision of shared signboard service and transmit the store's own advertising content data to the shared signboard operating server; and the store's own advertising content data and business status data are managed in the computer for controlling content.

On the other hand, the shared signboard unit is a complex of a plurality of small display cells configured to control the displayed content independently; the cells are distinguished by a fixed S-cell defined as a physical signboard area of each store and a dynamic C-cell defined in different sizes according to each ad as the area where the advertising content is displayed; and the ad revenue allocation is determined by the proportion of the C-cell area assigned to each S-cell area.

In the shared signboard service system, the shared signboard ID system applied to the shared signboard unit is composed of building ID ⓐ, each wall ID ⓑ of the exterior wall of the building, ID ⓒ for distinguishing each floor of the building, ID ⓓ assigned to each shared signboard unit, and a separate non-installation ID ⓧ assigned to the building wall space where the shared signboard unit is not installed when the shared signboard unit is discontinuous or smaller than the width of the building.

In the shared signboard service system, the shared signboard unit alternately operates in digital signboard mode, digital advertising mode, and digital bulletin board mode; the digital signboard mode is a mode for displaying the signboard of each store that provides space to install the shared signboard unit; the digital advertising mode is a mode for displaying the store's own advertisements or signs or advertisements of other stores; and the digital bulletin board mode is a mode for displaying public information.

In the shared signboard service system, the shared signboard unit is formed as being horizontally elongated, and the horizontal length corresponds to the width of the building.

In the shared signboard service system, the shared signboard units are installed in a plurality of separate buildings and interlinked to display advertising content or public information. In particular, the buildings are placed along a road section or in a hot place.

In the shared signboard service system, small signboard information of each store that provided the space to install the shared signboard unit is displayed at a predetermined area of the shared signboard in the digital advertising mode or the digital bulletin board mode. In this case, the small signboard information for each store is inserted into the displayed content in the form of a widget.

In the shared signboard service system, a franchise data system operating in connection with one or more stores is interconnected to a separate mobile application and the shared signboard operating server; the advertisement on the mobile application is displayed on the shared signboard unit; and the business status of the store is displayed on the shared signboard unit to induce purchase or reservation of product or service through the mobile application.

In the shared signboard service system, a franchise data system operating in connection with one or more stores is interconnected to a separate indoor display and the shared signboard operating server; and the content on the indoor display is displayed on the shared signboard unit in real-time.

In the shared signboard service system, QR code is displayed in a predetermined area of the shared signboard unit; access to the mobile application becomes available through the shooting of the QR code; the mobile application requests users to input information about a specific content portion displayed on the shared signboard unit; and the mobile application responds to information input using a multimedia-related function of a user terminal.

In the shared signboard service system, one or more cameras are installed in at least a part of the shared signboard unit to generate multimedia content using the captured image of the passerby; and advertisement viewership is measured through interactive advertising performed by one or more cameras installed in a part of the shared signboard unit and a separate mobile application interworking with the shared signboard operating server.

In the shared signboard service system, a culture content is displayed in the digital bulletin board mode; and the luminance of the shared signboard unit is adjusted according to a preset value or changed depending on the ambient illuminance detected in real-time.

### EFFECT OF THE INVENTION

According to the shared signboard service system of the present invention, the conventional signboards were installed individually and independently managed by each store owner to display the store's tradename is re-established with ICT technology as a shared digital signboard connected to a network. The shared signboard service system can be used multi-purposely by displaying the store's adverting content, third-party advertising content, and public information in addition to the store's tradename or trademark. The shared signboard can replace the signboard replacement procedure by changing the display content only. It can also reduce signboard replacement costs and prevent environmental problems.

In addition, if a store operates different kinds of businesses over time or period, such as the recently popular shared kitchen store, it is possible to display additional signboard images or advertising content accordingly.

In addition, the shared signboard service system can be installed in a regional hot place and utilized for multipurpose uses such as advertising media and digital bulletin boards. It can convert the signboard space into a profit space with economic value, create a new market of a new digital outdoor advertising medium, and provide a shared signboard service as an optimized advertising means for small businesses and self-employed people.

In particular, the advertising effect of the shared signboard service system is more extensive since it is a model more suitable for dense commercial areas or hot places. It can obtain a higher advertising effect at a significantly lower cost by sharing signboard space and distributing revenue than traditional advertising media such as newspapers and TV broadcasts that need higher advertising costs.

In terms of the building owner's perspective, the building owner's existing signboard space can be leased for additional revenue to the shared signboard service provider. The signboard space of the unleased store can be used as a revenue source through the lease of the idle space. The burden of making a signboard can be relieved even when the store is leased. The aesthetic and residual value of the building increases. Using the shared signboard, it is possible to effectively proceed with advertisements such as rental announcements of empty stores. It has the advantage of generating additional revenue from advertising revenue distribution by the shared signboard service provider.

From the store owner's or franchise headquarters' point of view, it is possible to share the existing store's signboard space with adjacent store owners and use it as a profit space. It is economically beneficial because installing the signboard separately at entry into the store is unnecessary. The contents of the signboard can be changed as required, such as events, discounts, menus, etc., and can be used for marketing. It is possible to select several signboards around the area simultaneously for interconnected advertising or place their advertisements in hot places to enhance the advertising effect. They can effectively perform marketing by linking promotions in mobile applications such as the O2O application. They also can interlink indoor advertisements inside the store with outdoor advertisements on the shared signboard. There is an advantage to generating additional revenue from advertising revenue distribution by the shared signboard providers.

On the other hand, even from the perspective of the local government or the central government, which is responsible for licensing signboards, advertising, etc., the public interest can be improved by inducing the shared signboard with significantly improved aesthetics compared to the existing signboard. The effect of revitalizing the local economy by supporting the installation of shared signboards such as local small businesses and self-employed people can be achieved.

In addition, from the manufacturer's point of view, they can collaborate with the shared signboard service provider to implement a new business model that shares revenue from shared signboard services through rental or lease instead of simply delivering shared signboard facilities.

### BRIEF DESCRIPTION OF DRAWINGS

Figure 1 is a conceptual diagram of a shared signboard service according to the present invention.
Figure 2 is an exemplary view of a shared signboard in a signboard mode according to some embodiments of the present invention.
Figure 3 is an exemplary view of a shared signboard in an advertising mode according to some embodiments of the present invention.
Figure 4 is an exemplary view of a shared signboard in a bulletin board mode according to some embodiments of the present invention.
Figure 5 is a conceptual diagram of switching the operating mode of a shared signboard according to the present invention.
Figure 6 shows an exemplary horizontally elongated signboard unit and a horizontal and vertical composite unit configuration of a shared signboard according to some embodiments of the present invention.
Figure 7 is a network configuration of an exemplary shared signboard service system according to some embodiments of the present invention.
Figure 8 is an exemplary configuration of a signboard operating database structure of a shared signboard according to some embodiments of the present invention.
Figure 9 is an exemplary view of a multi-building layout of interlinked shared signboards according to some embodiments of the present invention.
Figure 10 is an exemplary view of a hot-place type of interlinked shared signboards according to some embodiments of the present invention.
Figure 11 is an exemplary view showing interlinked shared signboards installed in a plurality of separate buildings located in a particular area according to some embodiments of the present invention.
Figure 12 is exemplary views showing interlinked shared signboards installed in a particular road section and some particular roadsides, respectively, according to some embodiments of the present invention
Figure 13 is exemplary views showing interlinked shared signboards installed in a particular region in a city and some specific cities, respectively, according to some embodiments of the present invention.
Figure 14 is an exemplary time schedule of sharing signs in a shared signboard according to some embodiments of the present invention.
Figure 15 is an exemplary view showing each building area where the shared signboard may be installed according to some embodiments of the present invention.
Figure 16 is an exemplary diagram of a shared signboard ID system according to some embodiments of the present invention.
Figure 17 to Figure 21 show various exemplary views of a shared signboard in a digital advertising mode according to some embodiments of the present invention.
Figure 22 is an exemplary view of a shared signboard in a digital bulletin board mode according to some embodiments of the present invention.
Figure 23 is an exemplary view of an indoor-outdoor-linked advertisement using a shared signboard according to some embodiments of the present invention.
Figure 24 is an exemplary view of an O2O (i.e., online to offline) advertisement using a shared signboard according to some embodiments of the present invention.
Figure 25 is an exemplary view of an interactive advertisement using a shared signboard according to some embodiments of the present invention.
Figure 26 is an exemplary view of a cultural content advertisement using a shared signboard according to some embodiments of the present invention.
Figure 27 is an exemplary view of a shared signboard performing automatic time control of the luminance to increase user visibility according to some embodiments of the present invention.
Figure 28 is an exemplary configuration of a shared signboard unit used in a shared signboard service system according to some embodiments of the present invention.
Figure 29 is an exemplary conceptual view of a fixed S-cell(i.e., store cell) and a dynamic C-cell(i.e., content cell) of a shared signboard unit according to some embodiments of the present invention.
Figure 30 is an exemplary conceptual view of revenue distribution using the S-cell and C-cell of a shared signboard unit according to some embodiments of the present invention.
Figure 31 and Figure 32 show two different diagrams showing the interconnection between the computer for controlling content, a store management system, and a shared signboard operating server according to some embodiments of the present invention.

### MODE(S) FOR CARRYING OUT THE INVENTION

The specific structural and functional description of the embodiments are disclosed only for illustrative purposes, and thus the present invention is not limited to the embodiments described herein.

According to the present invention concept, various changes can be applied to the embodiments, so some specific embodiments are illustrated in the drawings and described herein. However, this is not intended to limit the scope of the present invention to the particular embodiments. The scope of the present invention may include all changes, equivalents, or substitutes included in the conceptual and technical scope of the present invention.

Hereinafter, an exemplary embodiment of the present invention will be described in detail with reference to the accompanying drawings.

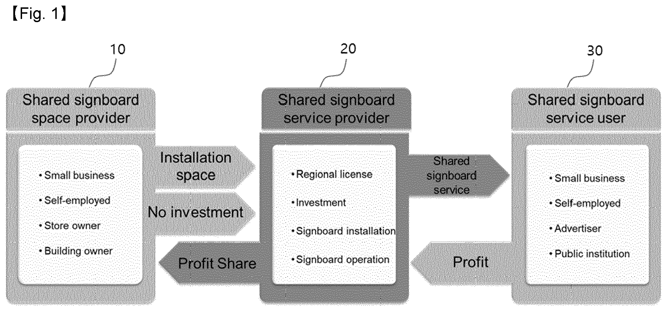

Figure 1 is a conceptual diagram of a shared signboard service according to the present invention.

Shared signboard service provider 20 provides shared signboard services by attracting areas and buildings to offer shared signboard services, installing shared signboards through equipment investments, and establishing management operating systems.

In the area where the shared signboard service is provided, the small business, the self-employed, etc., or the store owner are the owners or occupants who occupy the shared signboard installation space and serve as a signboard space provider 10. In return for allowing the shared signboard service provider 20 with a space to install the shared signboard, they are provided with the shared signboard facilities without additional investment. In the case of new buildings, the building owners become a signboard space provider 10, and they may lease individual stores in the building on which the shared signboard is already installed to the store owners. In addition, the old building owner has the right to grant or agree to install the shared signboard on the existing building.

Shared signboard service users 30 are small businessmen and self-employed workers, and they may be the same people as the signboard space provider 10. When the shared signboard performs external or third-party advertisements, the third-party or external businesses may become the shared signboard service users 30. In addition, if the shared signboard performs a public service advertisement or a public bulletin board function, the relevant public institution may become the shared signboard service user 30.

Suppose the shared signboard service user 30 is a third party who wants to advertise on another's shared signboard facility. In that case, a predetermined advertising fee must be paid, which results in advertising revenue to the shared signboard service provider 20. The shared signboard service provider 20 uses this advertising revenue to recover facilities investment costs while distributing a portion of the advertising revenue to the shared signboard space providers 10 in return for the provision of shared signboard space.

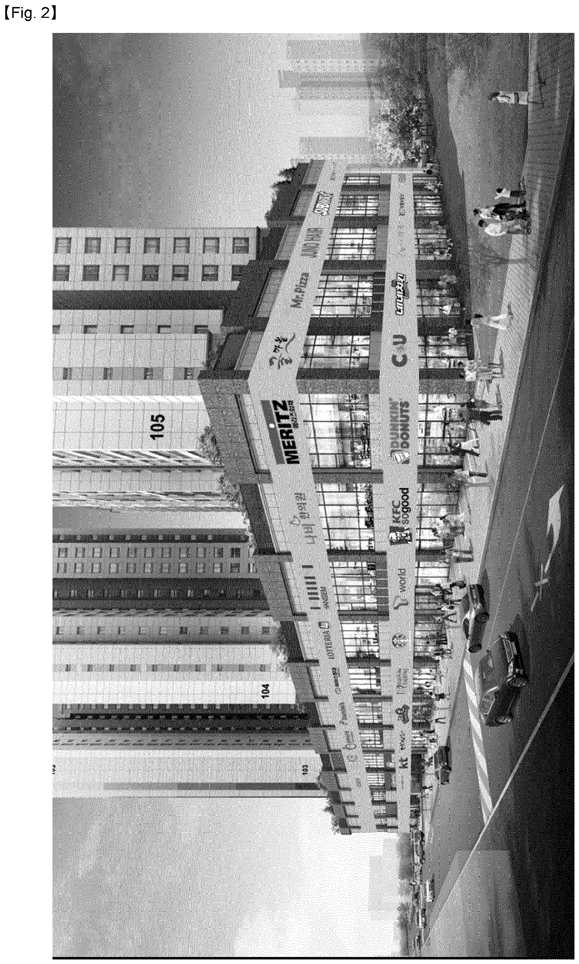

Figure 2 is an exemplary view of a shared signboard in a signboard mode according to some embodiments of the present invention.

The shared signboard according to some embodiments of the present invention is an integral or all-in-one type signboard unit provided by the shared signboard service provider 20. The vertical length of the shared signboard unit corresponds to the space between the floors of the exterior walls of the building where the shared signboard is installed. The horizontal size fits the width of the outer wall of the building so that the entire floor space of the exterior wall of the building can be used as an installation space for the shared signboard.

When the shared signboard is used in a signboard mode, it plays the same role as the conventional signboard by providing a still image of the tradename or brand of the store on the allocated space of the shared signboard unit. If the same still image is posted for a certain period, the shared signboard unit may stop for a moment to protect the LED pixels of the shared signboard unit or change the color or contents of the still image. When different images are provided on the shared signboard, the shared signboard unit can be used continuously.

In the shared signboard of Figure 2, the size of the signboard space allocated to each store is shown the same. However, the size of the signboard space for each store could be different as the leased area of each store may vary. Therefore, each store's physical signboard space area, the S-cell or the store cell, varies according to the leased area's size.

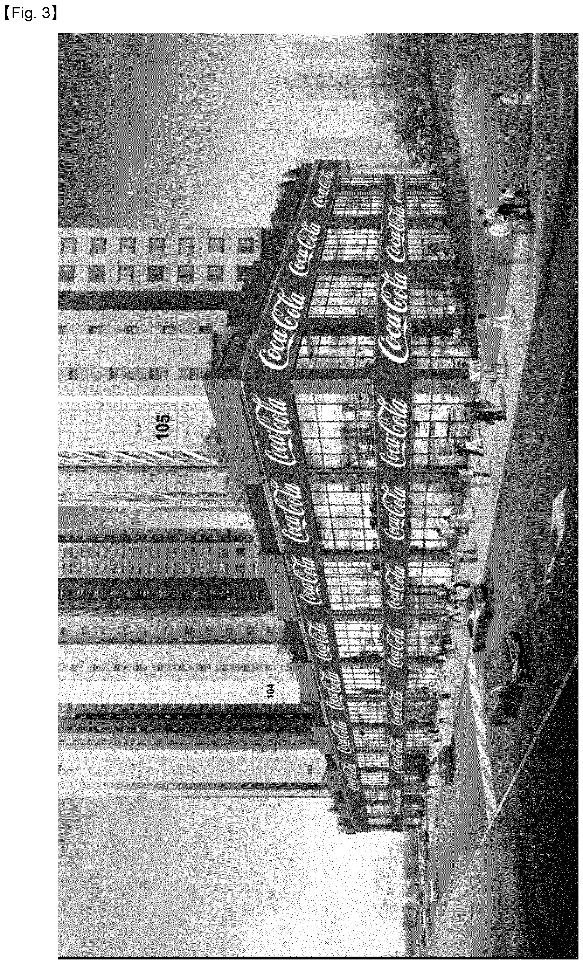

Figure 3 is an exemplary view of a shared signboard in an advertising mode according to some embodiments of the present invention.

When the shared signboard is used in advertising mode, the physical space allocated to each store is ignored. The advertising content is dynamically allocated on the shared signboard according to the size of the content so that the shared signboard can perform its function as a commercial billboard. In the present specification, it is referred to as an advertising mode when the shared signboard displays a third party's signboard image or advertising content other than the signboard image of the store itself. Meanwhile, in another embodiment, it is possible to distinguish the signboard mode from the advertising mode according to the type of content, whether the content is a signboard image or advertisement video.

Different advertisements can be posted for each section by the hour in the advertising mode. Accordingly, the size of the C-cell (or content cell) that is a section dynamically assigned to each ad will vary from time to time depending on the area occupied by each ad.

When posting the ad of a third-party advertiser through the entire shared signboard, which is an all-in-one display panel, as shown in Figure 3, the features of the all-in-one configuration of the shared signboard of the present invention are emphasized, and the advertising effect is also maximized. However, on the other hand, several different advertisements may be posted for each shared signboard section, which will be described later.

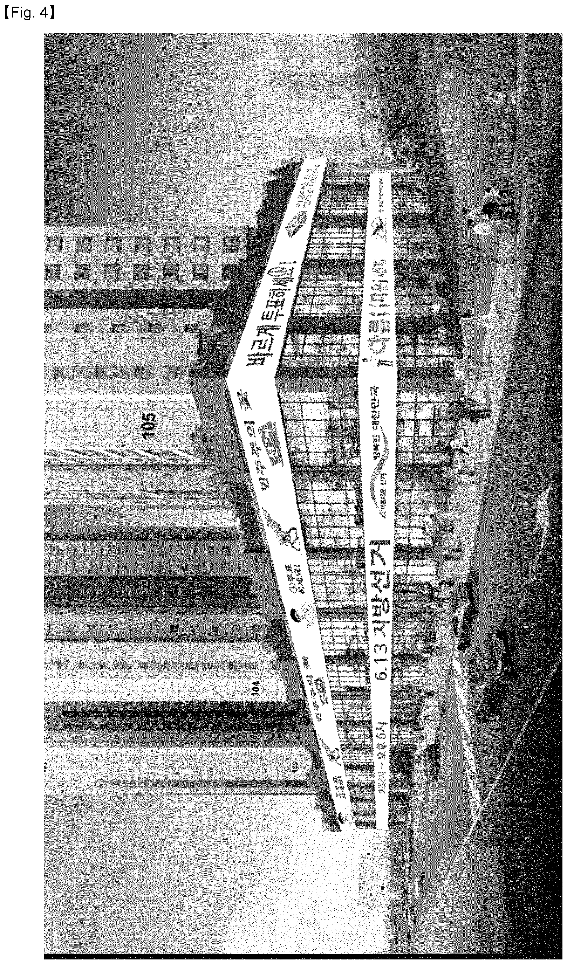

Figure 4 is an exemplary view of a shared signboard in a bulletin board mode according to some embodiments of the present invention.

When shared signboard is used in bulletin board mode, public information such as election information, living information, and news can be provided using the shared signboard space. Digital bulletin board mode is an operation mode in which public information providers, including local governments, related public agencies, etc., use shared signboards to provide various public information, including living information, disaster information, etc.

Although the signboard mode, advertising mode, and digital bulletin board mode are distinguished here, it is possible to perform the signboard mode, advertising mode, digital bulletin board mode at the same time by several sections of a shared signboard. Signboard mode, advertising mode, and digital bulletin board mode may be alternately performed for each building floor.

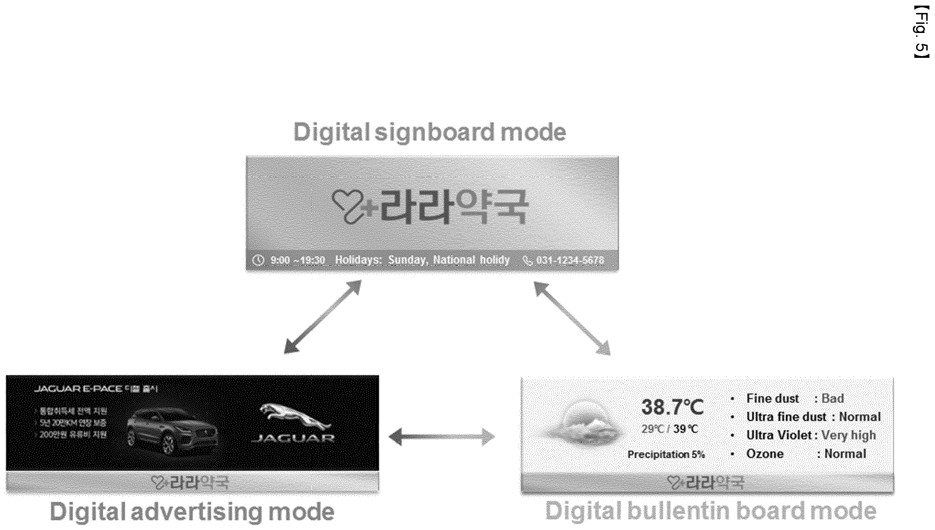

Figure 5 is a conceptual diagram of switching the operating mode of a shared signboard according to the present invention.

The shared signboard can alternately operate in (digital) signboard mode, (digital) advertising mode, and digital bulletin board mode. The shared signboard operates typically in a digital signboard mode that performs the function of a signboard of an individual store. It may work in a digital advertising mode that exposes third-party advertisers' ads, or it may operate in a digital bulletin board mode that displays various public information provided by the public information provider according to the display schedule.

Digital signboard mode is an operation mode in which store owners, including store owners, small businesses, and self-employed people, use the shared signboard as a digital signboard to display their tradenames and trademarks. In this mode, additional content, including the store owner's business hours, holidays, contact information, etc., may be displayed in the predetermined area of the shared signboard along with the tradenames and trademarks.

Even in the case of digital advertising mode and digital bulletin board mode, in addition to the advertising content or public information content displayed by default, basic signboard information such as the tradename and trademark of the store where the signboard is located may be displayed along with the advertising or public information content. Unlike a conventional digital billboard, the shared signboard of the present invention has a concept of integrating and operating the signboard of each store in one piece. It is preferable to display the basic signboard information of the store in which the signboard is located in some areas of the shared signboard in any mode.

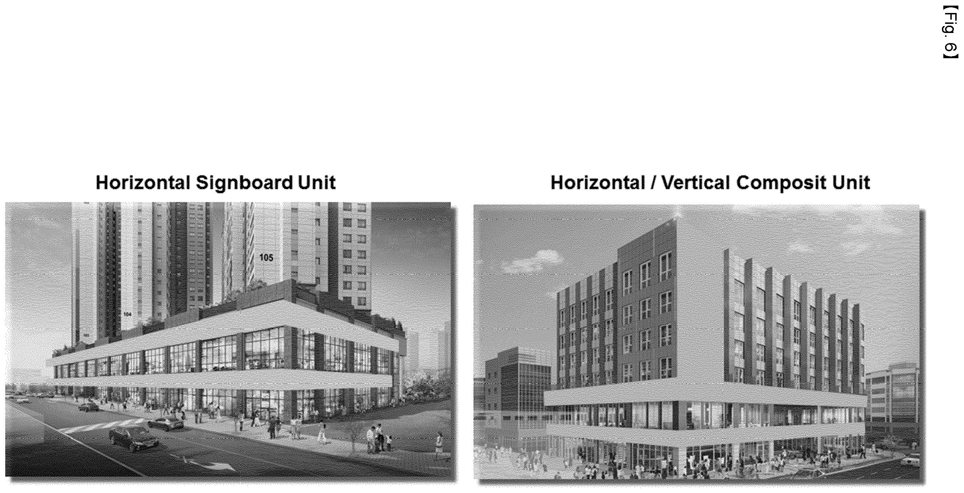

Figure 6 shows an exemplary horizontally elongated signboard unit and horizontal and vertical composite unit configurations of a shared signboard according to some embodiments of the present invention.

The horizontally elongated and horizontal/vertical composite units illustrated in Figure 6 are just examples. The appearance of the shared signboard applicable to the present invention is not limited thereto. The shared signboard may be formed to cover an entire wall of a particular building or configured to have a specific shape on one or more walls.

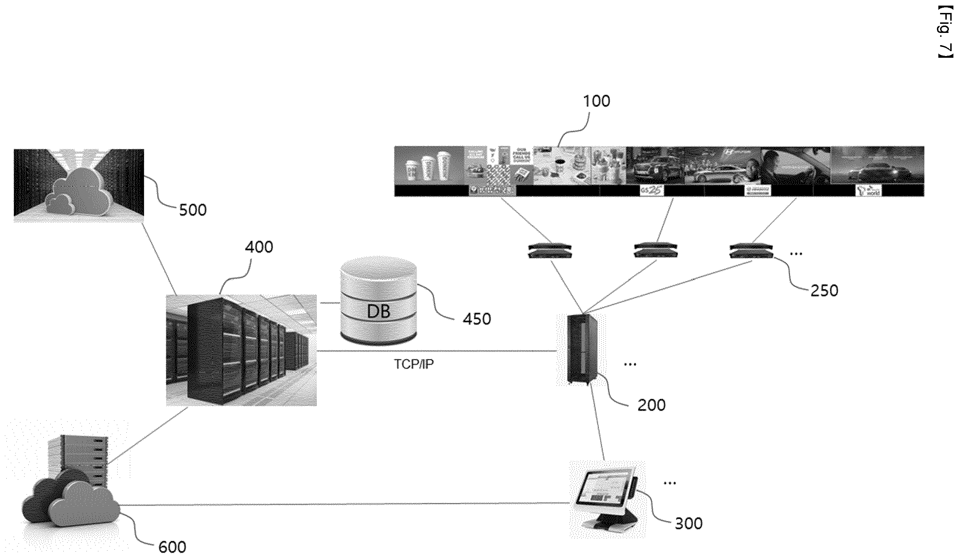

Figure 7 is a network configuration of an exemplary shared signboard service system according to some embodiments of the present invention.

The shared signboard service system comprises a shared signboard unit 100 (note: only one shared signboard unit is described for illustrative purposes), a computer for controlling display content 200, and a shared signboard operating server 400. The shared signboard unit 100 has a predetermined size corresponding to several individual signboards. The computer for controlling display content 200 is provided with the shared signboard unit 100 in each building or each floor of a building where the shared signboard is installed. The computer for controlling display content 200 is configured to store display content and supply the content to the shared signboard unit 100 according to a display schedule. The shared signboard operating server 400 is configured to store and edit the display contents and display schedules and supply the edited display content and schedule to the computer for controlling display content 200. The display content may include signboard images or videos, advertising videos, and bulletin board videos

Between the computer for controlling display content 200 and the shared signboard unit 100, a plurality of display controllers 250 may be inserted to control the display of the shared signboard unit 100 by a predetermined physical section according to instructions from the computer for controlling display content 200. A networking function is provided to the shared signboard unit 100 and the display controller 250 to support wired or wireless communication with the computer for controlling display content 200.

The shared signboard operating server 400 includes a database 450 for storing data such as display contents, display schedules, shared signboard IDs, and cell structures used in the shared signboard operating server 400. The shared signboard operating server 400 may be connected with the open public data system 500 provided by the central government, local government, government offices, etc., to provide the various public information to the shared signboard unit 100. The public information may include weather information, environmental information, traffic information, disaster information, CCTV video information, etc.

The computer 200 may be connected with a store management system 300 of each store to receive various information such as vacant seats, waiting number, store event, business campaign, business hours, CCTV video information in the store, etc. The computer for controlling display content 200 can further process the received information to display the same on the shared signboard unit 100. Otherwise, the information received from the store management system 300 may be sent by the computer 200 to the shared signboard operating server 400 for further processing. The processed video information and associated display schedule may be fed back to the computer for controlling display content 200.

The store management system 300 may be implemented to include or be linked with a POS system in the store. In addition, a web application server (WAS) may be provided to register the information such as signboard operation status, adverting content input from the store management system 300 to the shared signboard operating server 400. The specific configuration of the store management system 300 will be described later.

When the store is a franchise store, the shared signboard operating server 400 of the present invention may be connected with the franchise data system 600 of the franchise headquarter connected to each store management system 300. In such a case, the event information, campaign information, etc., can be provided from the franchise data system 600 to the shared signboard operating server 400 for further processing. In addition, various information relating to each store, such as the number of vacant seats and waiting number, may be sent from the franchise data system 600 to the shared signboard operating server 400.

The shared signboard operating server 400 manages the entire shared signboard service system. To this end, it has functions such as account management, signboard management, information management, content management, statistics management, and settlement management. In addition, an information data generating system may be added between the open public data system 500 and the shared signboard operating server 400. The information data generating system has a public API interlocking module and a web crawler to obtain information from the open public data system 500. A data consistency verification system for periodically checking, correcting, and reporting data errors may be added to the information data generating system to maintain data consistency with the open public data system 500.

The entire shared signboard service system may further comprise an advertising content operating system operated in conjunction with an external advertising agency's data system for registering advertising content and advertising schedules to the shared signboard operating server 400. It may still further comprise a content downloading web application server used to download display contents and display schedules generated at the shared signboard operating server 400 to the computer for controlling content 200. It may still further comprise advertising content storage used to store multimedia. advertising content such as videos and

In addition, a web application server (WAS) for reporting the operating status of the shared signboard service system, the content displaying status, etc., to a separate reporting system or a reporting system included in the shared signboard operating server 400. Further, a log analysis system for analyzing content operating results, generating report statistics, and transmitting data on operating errors of the shared signboard service system to the reporting system may be provided.

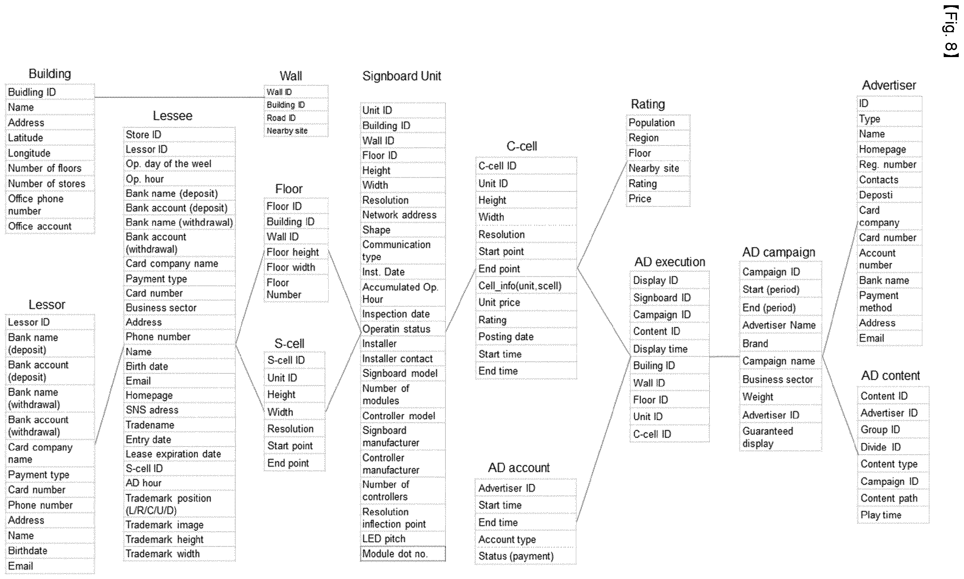

Figure 8 is an exemplary configuration of a signboard operating database (DB) structure of a shared signboard according to some embodiments of the present invention.

The operating DB manages various data used to operate the shared signboard service system. The data comprises the physical location of the installed shared signboard, such as the installed shared signboard unit, installed building, installed wall, installed floor, etc. The data further comprises the shared signboard space provider data such as S-cell data referenced to respective occupants of the space, store owner or lessee data, building owner or lessor data, etc. The data further comprises the advertising content such as C-cell data referenced to respective advertising content, advertiser, advertising content, advertiser's advertising campaign, advertising execution, advertising account, and signboard price rating.

Building data, wall data, and floor data relate to specific location and size of buildings, walls, and floors where shared signboard is installed, all distinguished by individual IDs.

In addition to the size information such as the height and width of the signboard, the shared signboard unit data includes communication methods, uptime, installer information, display controller information, etc. Shared signboard S-cell data includes physical cell unit information assigned to individual stores, and shared signboard C-cell data includes content cell unit information of signboard or advertising content. S-cell data the height and width, resolution, the starting point, the end point of the S-cell in addition to the S-cell ID and its unit ID, and the C- cell data includes all kinds of data corresponding to S-cell data and further includes C-cell exposure price (i.e., advertising unit price), rating for advertising unit price calculation, content posting date, and content start and end time.

In particular, the C-cell data may include additional information about the space for performing a small signboard function of the store (see the distinguished area at the bottom of each signboard in Fig. 5). The space may provide sales information such as opening hours, waiting number, and public information even in the advertising mode. They may include widget information such as the display area, height, and width of the widget when providing information applied to the distinguished space in the form of a widget.

The specific remaining data can be understood from the description in Figure 8, so a detailed explanation will be omitted.

From now on, several different signboard or advertising types available through various modes of the shared signboard service system will be explained.

First, in the case of "signboard type," each store's unique tradename or trademark is displayed. Preferably, the tradename or trademark is uniformly displayed as a still image under a predetermined format.

Next, in the case of the "general type," only one advertisement is applied to the entire shared signboard unit to advertise a single or plurality of content of a single advertiser. It includes displaying different images simultaneously for each area or repeatedly displaying the same tradename or trademark across the shared signboard.

Next, in the case of the "local type," it is a type for small business advertisers such as local small businesses and self-employed businesses. Several advertisers divide the shared signboard area to display their advertising videos, tradenames, or trademarks.

In the case of other "public type," public advertising or public information provided by local governments, central governments, or public institutions is displayed on at least a portion of the shared signboard.

In the case of "cultural type," cultural content such as music, videos, and artworks is provided on at least a part of, or preferably across, the entire shared signboard.

Even when displaying a third-party ad, at least a part of the shared signboard area may continuously display the tradename or trademark of the signboard space provider's store to maintain the primary signboard function. It is to comply with relevant local signboard or advertising regulations.

Now, various operating methods will explain some practical utilization of the shared signboard of the present invention.

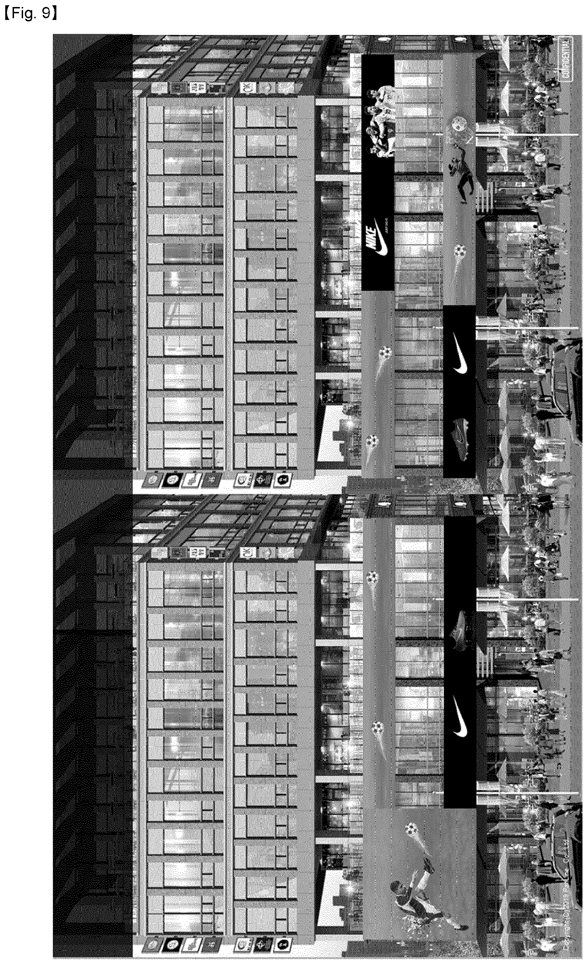

Figure 9 is an exemplary view of a multi-building layout of interlinked shared signboards according to some embodiments of the present invention.

Figure 9 illustrates the case of extending the spatial display function by interconnecting the shared signboard units each provided in a plurality of buildings. It is possible to display a single significant advertising content through the shared signboards of multiple structures by interlinking the display operations of the shared signboards installed on the exterior walls of the plurality of adjacent buildings, thereby significantly increasing the immersion of customers viewing the advertisement.

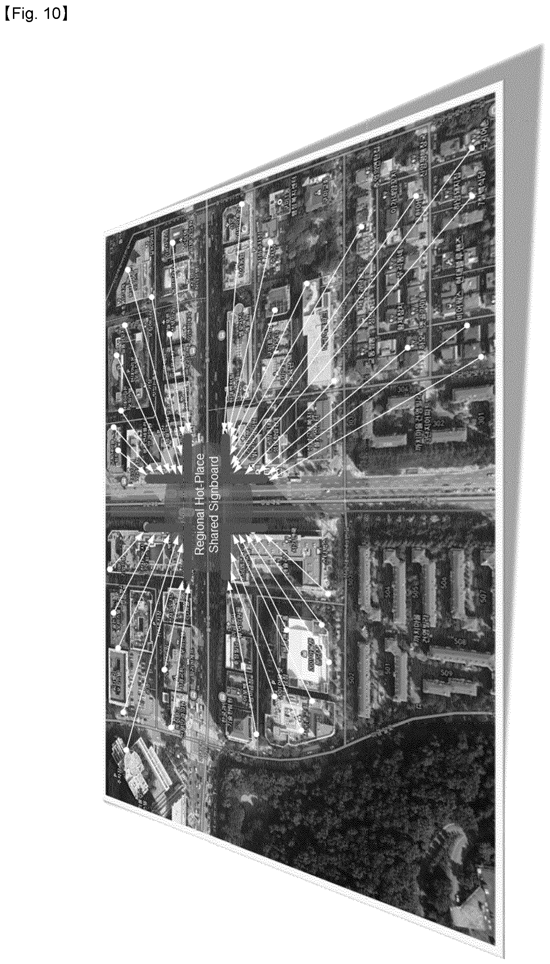

Another example of effectively utilizing the shared signboard of the present invention may be the hot-place layout shown in Figure 10. An example of spatially extending the multi-building format in Figure 9 is a hot-place layout shown in Figure 10. The shared signboards are installed and operated in hot places with large populations. The advertising effect may be more immersive if the shared signboard displays dynamic advertising content or extra-large sized advertising content that works together in conjunction with other shared signboard displays installed in a group of roadside buildings standing side by side, a group of roadside buildings facing each other, or a group of buildings facing a crossroad. For example, suppose you interconnect the shared signboard units installed in two or four buildings facing each other and display dynamic advertising content. In that case, you can significantly enhance advertising effects and viewer immersion through such appropriate spatial placement of the shared signboard units. Advertising content suitable for horizontal interconnection of signboards may include horse racing, car racing, sports, etc.

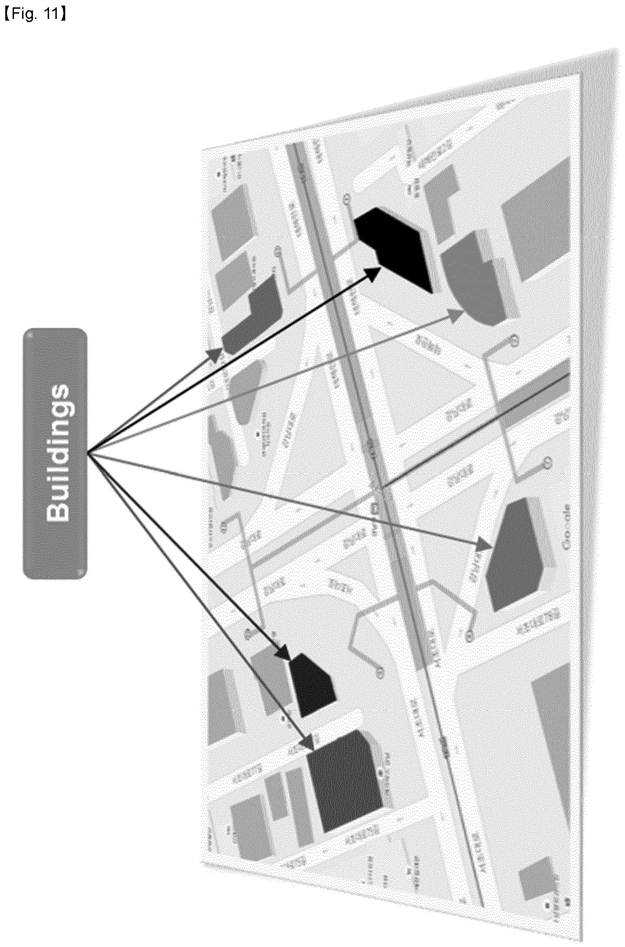

Figure 11 is exemplary views showing interlinked shared signboards installed in a particular road section and certain roadsides, respectively, according to some embodiments of the present invention.

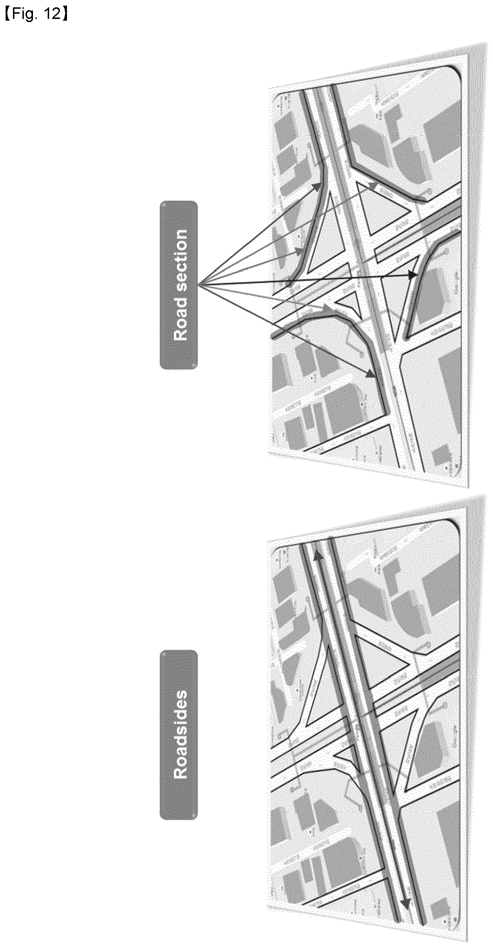

The conventional large-screen advertisement available on a LED billboard installed in buildings along the boulevard is different from the application in Figure 11. In the case of the application in Figure 12, instead of establishing an independent large-screen LED panel, by systematically interlinking a plurality of shared signboard units for basically performing as signboards and driving only those shared signboard units required for advertising, you can obtain advertising effects similar to that from a virtual extra-long billboard spanning hundreds or thousands of meters. Thus, the advertising effect can be maximized while reducing the advertisement cost.

Figure 12 is an exemplary view showing interlinked shared signboards installed in a plurality of separate buildings located in a particular area according to some embodiments of the present invention.

If shared signboards are installed in a plurality of buildings with common attributes in a particular area, such as buildings with specific franchise cafes, or establishments where a specific brand shop is located, the same or associated advertisements may be displayed through shared signboards placed in the plurality of buildings.

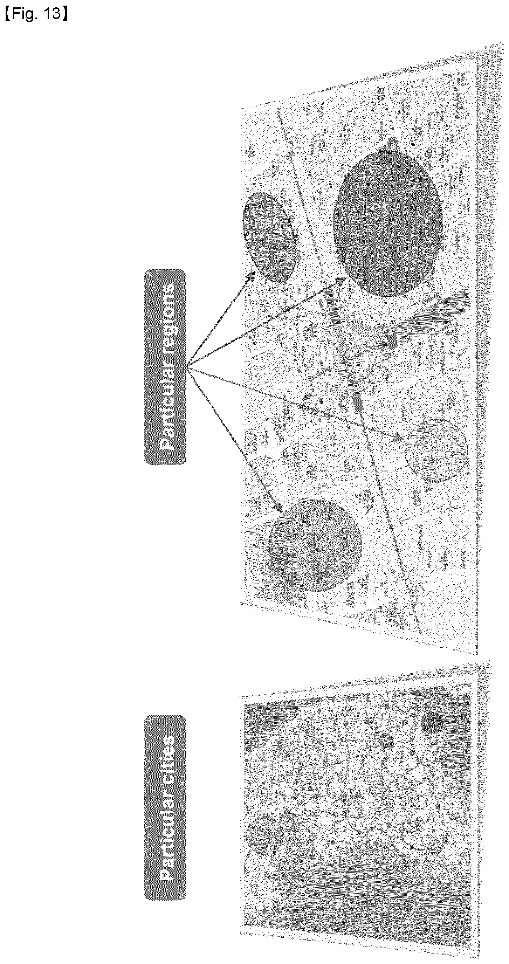

Figure 13 is exemplary views showing interlinked shared signboards installed in a particular region in a city and some specific cities, respectively, according to some embodiments of the present invention.

The application in Figure 13 shows a concept that further expands the application in Figure 12. In Figure 13, it is more effective to perform advertising or campaigns by interlinking shared signboards installed in buildings with a particular common property. For example, you can display the same service advertisement in the same time section on a plurality of shared signboards respectively installed in multiple central and local government buildings scattered throughout the country. This application can be effectively utilized in the case of national campaigns, various election campaigns, etc.

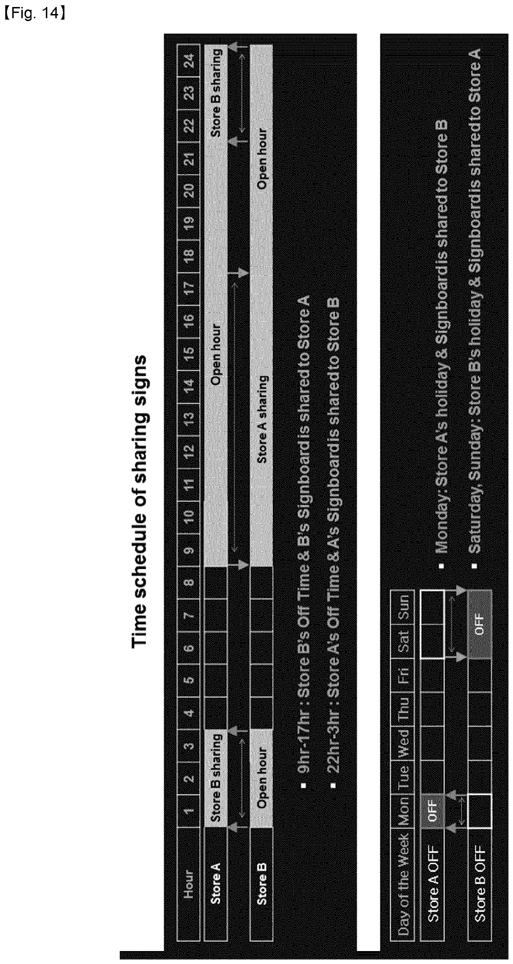

Figure 14 is an exemplary time schedule of sharing signs in a shared signboard according to some embodiments of the present invention.

The features of the shared signboard of the present invention differ from the conventional large-scale billboard, which is clearly shown by the conversion of the operating mode using the store-specific opening hour difference in the schedule.

The shared signboard of the present invention is based on the idea of usually performing the primary function of the store signboard while lending the idle signboard section to other stores when the signboard operation is unnecessary, or the need for signboard operation is lowered. The essential idea is to share signboards with others by lending an idle signboard section to those who need it at the moment.

In Figure 14, the S-cell section occupied by store A displays the signboard image of store A in the business hour of store A from 9:00 to 22:00. From 22:00 to 4:00 the next day, the S-cell section of store A displays a signboard image of store B operating during that time. Similarly, in the case of the S-cell section occupied by Store B, which is open from 18:00 to 4:00 the next day, the signboard image of Store A can be displayed in that S-cell section during the store B's idle time from 9:00 to 16:00. Further, the S-cell of both stores can be used to advertise a third party during the idle time from 4:00 to 9:00 when both stores are closed.

This method can be similarly applied between two stores with different days of the week, for example, every Monday when store A is closed, the A's S-cell section of the shared signboard can be shared by the store B, and the B's S-cell section of the shared signboard can be shared by the store A on Saturdays and Sundays when the store B is closed.

Suppose a certain S-cell is used to display the signboard of a store and defined to be operating in signboard mode. In that case, the S-cell displaying content other than its signboard, such as signs or advertisements of other stores, will be defined as operating in advertising mode. According to this definition, the concept of signboard sharing of the present invention may be regarded as switching your portion of the signboard that is not operating in the signboard mode to the advertising mode for displaying another person's signboard or advertising yourself or others. In other words, while the shared signboard is switched to advertising mode, it may be said that the sharing of the signboard with adjacent store owners or third-party advertisers takes place.

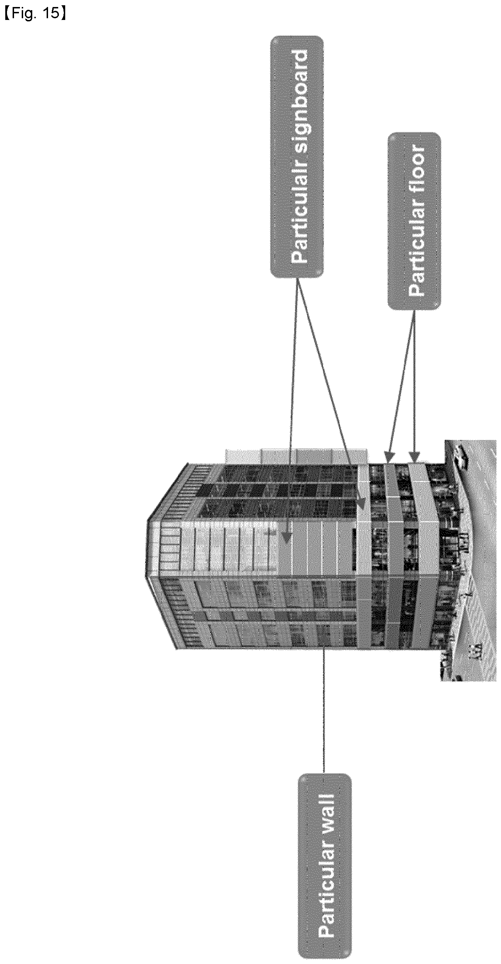

Figure 15 is an exemplary view showing each building area where the shared signboard may be installed according to some embodiments of the present invention.

The shared signboard may be installed on the exterior wall of a particular floor of the building, only on a specific external wall area, or on a particular outer wall as a whole. If the shared signboard consists of a transparent panel, it can also be installed on the glass exterior wall.

It is possible to identify each shared signboard by the location of the shared signboard. It is efficient to assign an ID as an identifier to each building, wall, floor, and shared signboard.

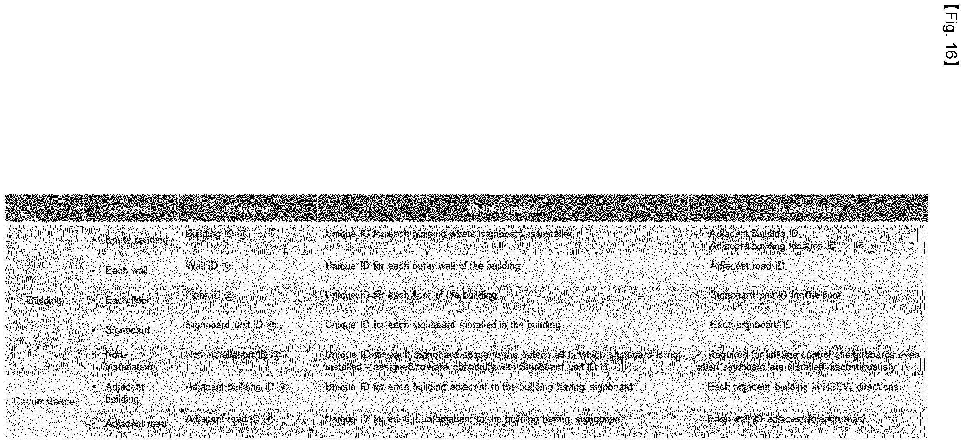

Figure 16 is an exemplary diagram of a shared signboard ID system according to some embodiments of the present invention.

The shared signboard ID system is composed of building ID ⓐ, each wall ID ⓑ of the exterior wall of the building, ID ⓒ for distinguishing each floor of the building, ID ⓓ assigned to each shared signboard unit, and other additional IDs may be given for adjacent surrounding buildings and their walls. On the other hand, even if the shared signboard unit is discontinuous or smaller than the width of the building, a separate non-installation ID ⓧ should be assigned to the building wall space where the shared signboard unit is not installed.

This method of ID granting not only provides IDs to shared signboard to match the geographical location or administrative address system of buildings and walls and signboard but also facilitates data matching between each shared signboard ID and other operational DB data, so that shared signboard services can be provided smoothly despite the complex building location and structure.

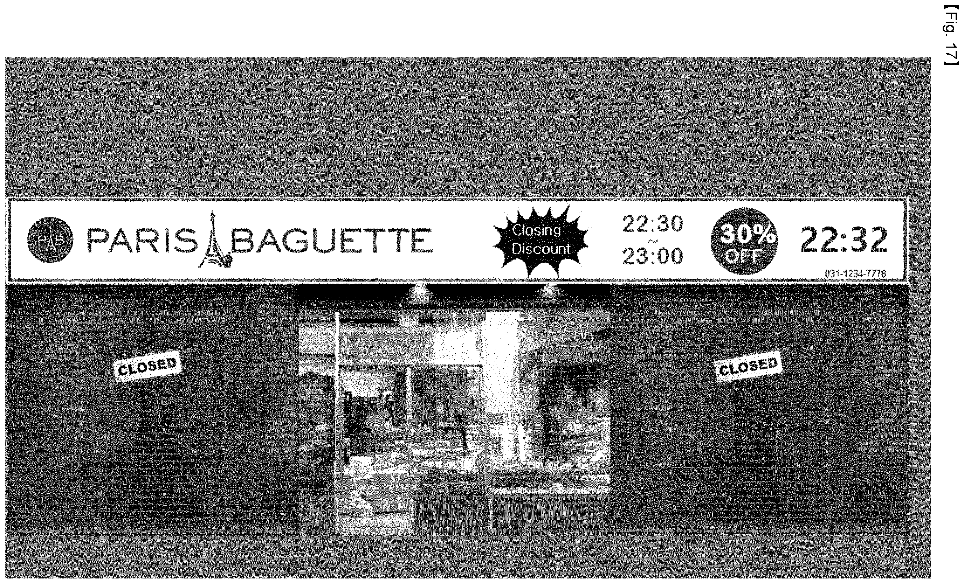

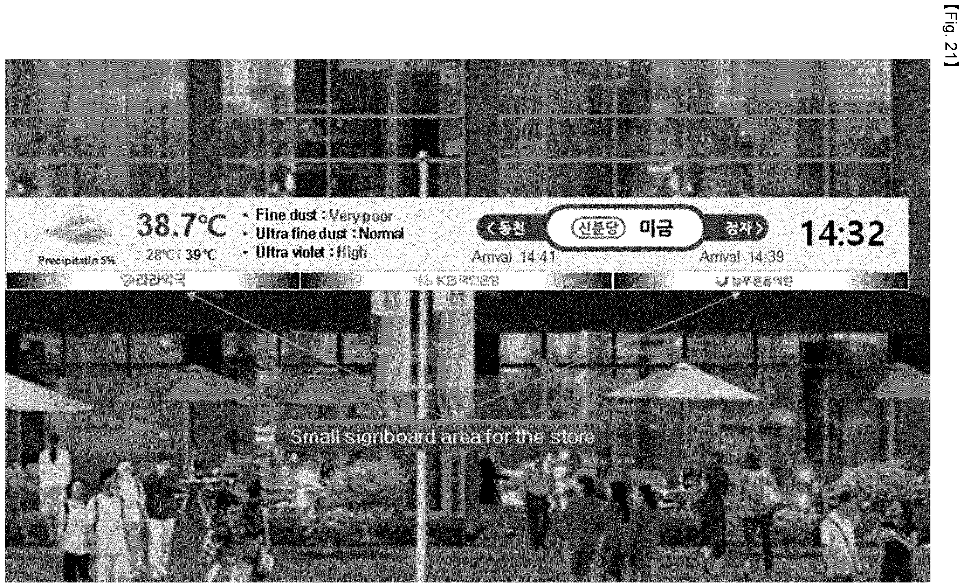

Figure 17 to Figure 21 show various exemplary views of a shared signboard in a digital advertising mode according to some embodiments of the present invention. Figure 17 or 21 shows the same place with the same stores consisting of a pharmacy, a bank, a hospital from the left side.

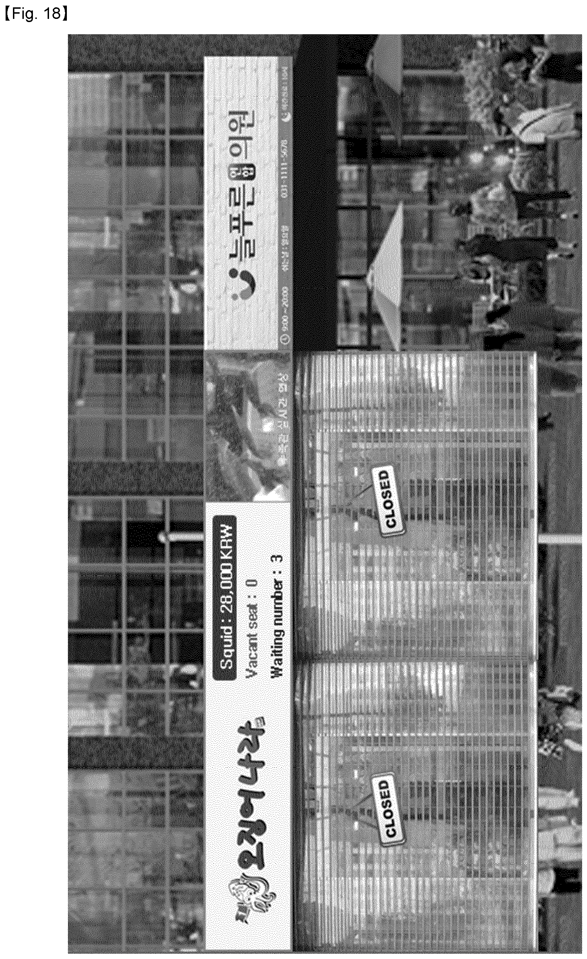

Referring to Figure 17, the advertising mode is performed so that the central store that is not closed uses the signboard area of adjacent stores where the business is closed as a billboard to promote events such as discount events. Referring to Fig. 18, the hospital signboard on the right operates in a signboard mode during business hours. The signboards on the left and middle are used in an advertising mode that displays a third party's store advertisements.

In this way, the shared signboard of the present invention is configured to change the displayed content by time and season. According to this configuration, multiple businesses can run in a single store by changing the business type for breakfast, lunch, dinner, season, etc., and display tradenames or advertisements in line with the changed business type on the shared signboard to maximize the efficiency of store use and further support small capital start-ups. On the other hand, in the case of business type changes at the same store that shares the same kitchen, it is possible to configure the shared signboard content to additionally display menus provided by each store, video of the shared kitchen, etc. so that users can easily recognize the changes in business type by time.

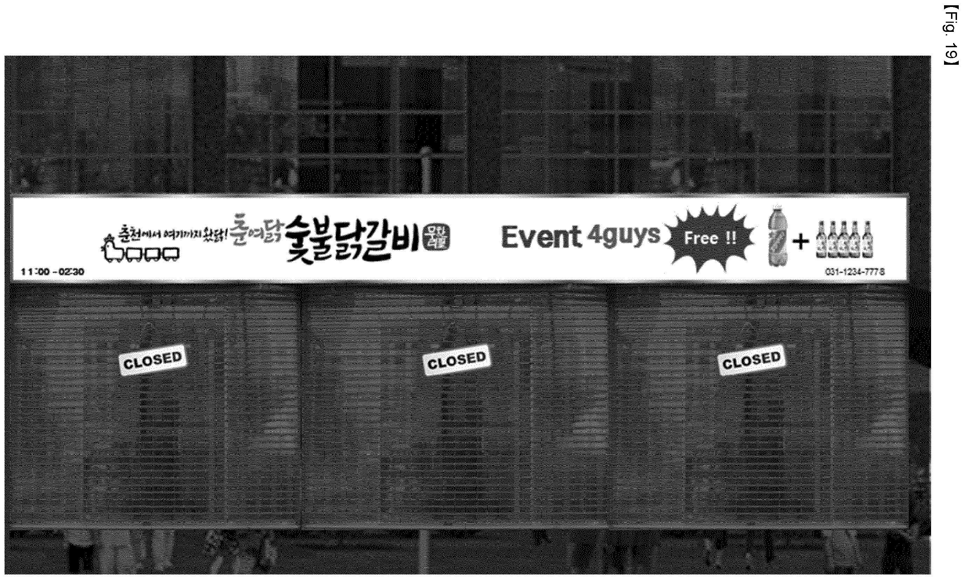

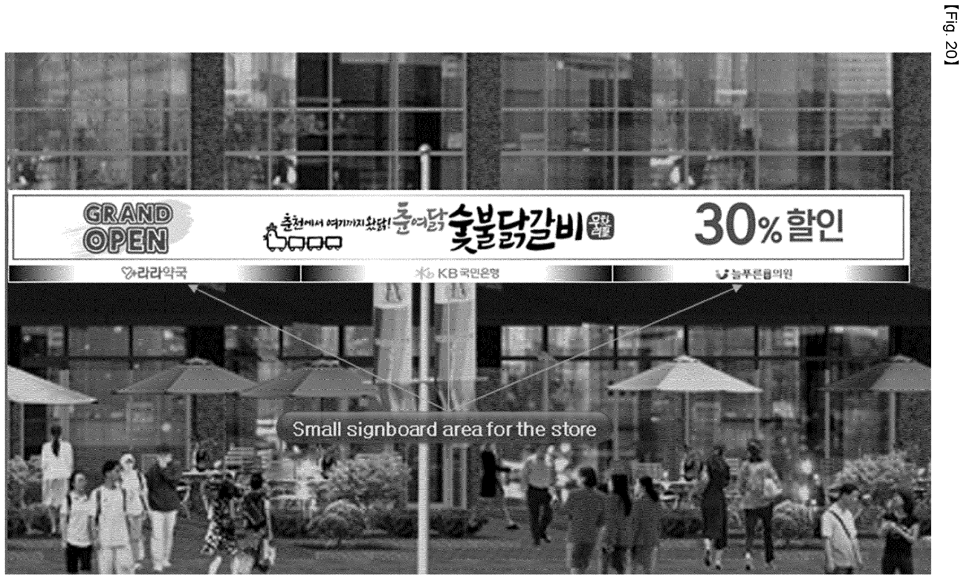

Referring to Figure 19, the signboard area of stores corresponding to non-business hours is used in advertising mode to display signboard or advertising contents of other stores in the vicinity. Referring to Figure 20, the signboard area of stores is converted into advertising mode for a short time during their business hours to display signboard or advertising content of other stores in the vicinity. In Figure 19, no information of each closed store is shown on the signboard in the advertising mode. In Figure 20, however, the small signboard information of each store running a business is at the bottom of the signboard in the advertising mode. In contrast, the rest of the signboard area displays the advertising content of other stores. This small signboard information may be provided as a widget with a predetermined specification. The necessary information for the widget must be included in the operating DB connected to the shared signboard operating server.

In Figure 21, the shared signboard is used for advertising certain joint events and event participating stores during the event period. Small businesses and self-employed people whose stores are located inside the building often have difficulty installing and displaying their conventional signboard on the exterior wall of the building. It is noteworthy that they can have the opportunity to advertise on the outer walls of the building using the shared signboard advertising of the present invention. Through this, it is also possible to significantly increase the customer inflow rate by displaying the location of or route to the inside store that cannot be identified from the outside in the form of a map on the shared signboard or shared signboard app associated with it (e.g., a dedicated app to support various functions of shared signboard).

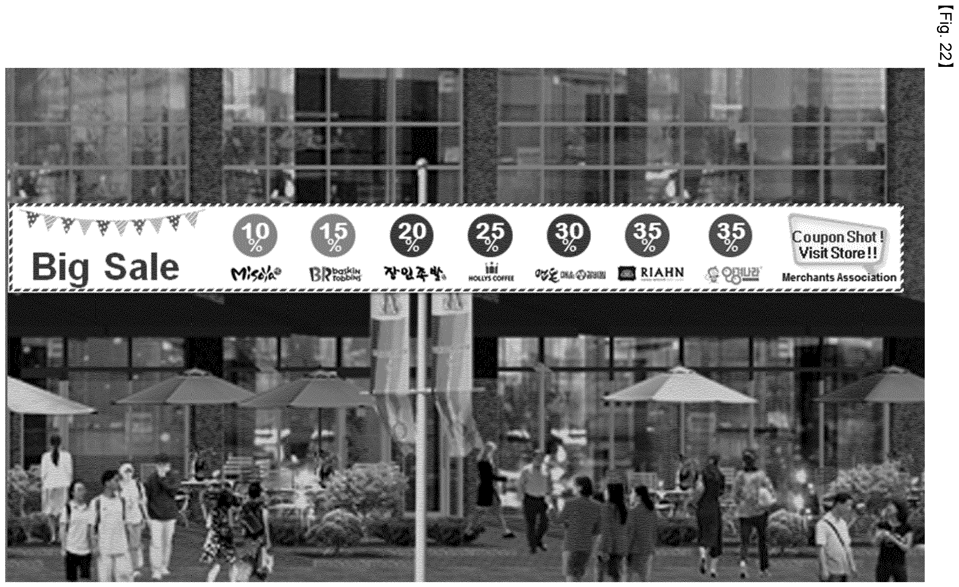

Figure 22 is an exemplary view of a shared signboard in a digital bulletin board mode according to some embodiments of the present invention. In addition to providing simple living information, the shared signboard can display public campaigns, finding a missing child, real-time news, etc. When a donation campaign is run with the shared signboard, you can actively encourage participation by displaying information about real-time donation counting. In this case, the shared signboard may be configured to display the small signboard information of each store at the bottom, the store providing the signboard area in the digital bulletin board mode.

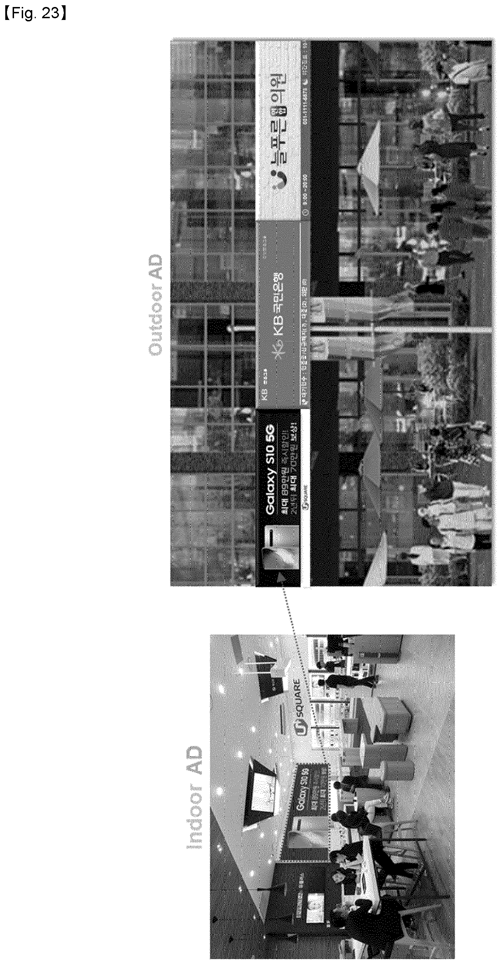

Figure 23 is an exemplary view of an indoor-outdoor-linked advertisement using a shared signboard according to some embodiments of the present invention. In Figure 23, a situation in which the store's advertisement is displayed in the shared signboard at the lefthand store is shown after conversion from the signboard mode to the advertising mode. The advertising video on the display installed inside the store is also displayed in the external lefthand section of the shared signboard, which relates indoor advertising with outdoor advertising. Under this situation, the franchise data system 600 of franchise headquarter connected to each store management system 300 should be interconnected to the shared signboard operating server 400 as described in Figure 7. The indoor advertising content of each store should be provided to the shared signboard operating server 400 through the franchise data system 600 or the computer for controlling content 200 to be scheduled as the outdoor advertising content.

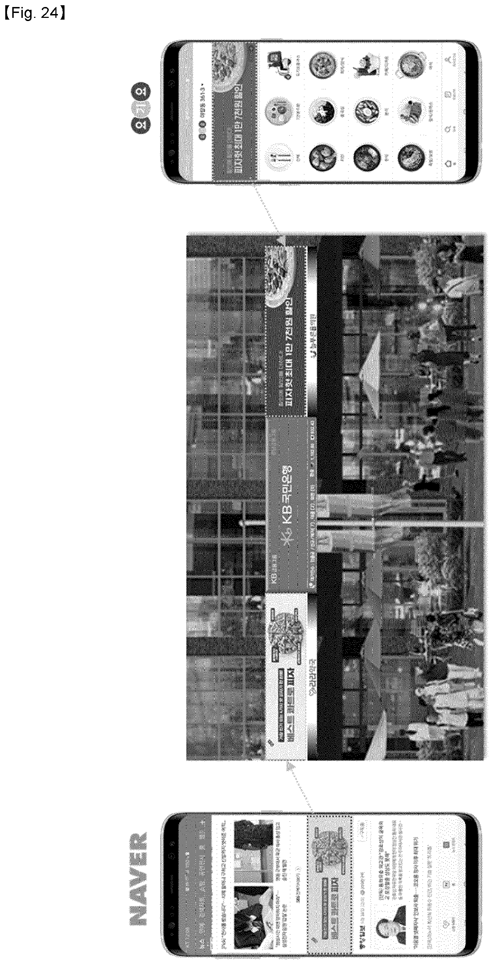

Figure 24 is an exemplary view of an O2O (i.e., online to offline) advertisement using a shared signboard according to some embodiments of the present invention. In Figure 24, the advertising content displayed in the mobile application is also shown in the shared signboard that appears as an offline medium. On the other hand, some other display content associated with the adverting content of the mobile application could be displayed in the shared signboard.

In such an environment, it is possible to make purchases and reservations through the mobile application, and the information such as the store's menu, price list, waiting number, and the number of vacant seats can be displayed in the mobile application as well as in the corresponding store section of the shared signboard. To this end, the store management system 300 of Figure 7 may provide information such as the store's menu, price list, waiting number, the number of vacant seats to the shared signboard operating server 400, and the franchise data system 600 interconnected to the shared signboard operating server 400 may work in conjunction with the mobile application to support real-time ordering, vacant seat reservation, etc.

In addition, for example, it may be configured to display information about real-time reviews and ratings of users who visit the store on a shared signboard. By linking mobile apps that can upload customer reviews and ratings for products and services, as well as franchise data systems and shared signboard service operating servers, you can provide more differentiated shopping information to locked customers, and you can also conduct various marketing events such as customer review evaluations and usage photo contests on the shared signboard.

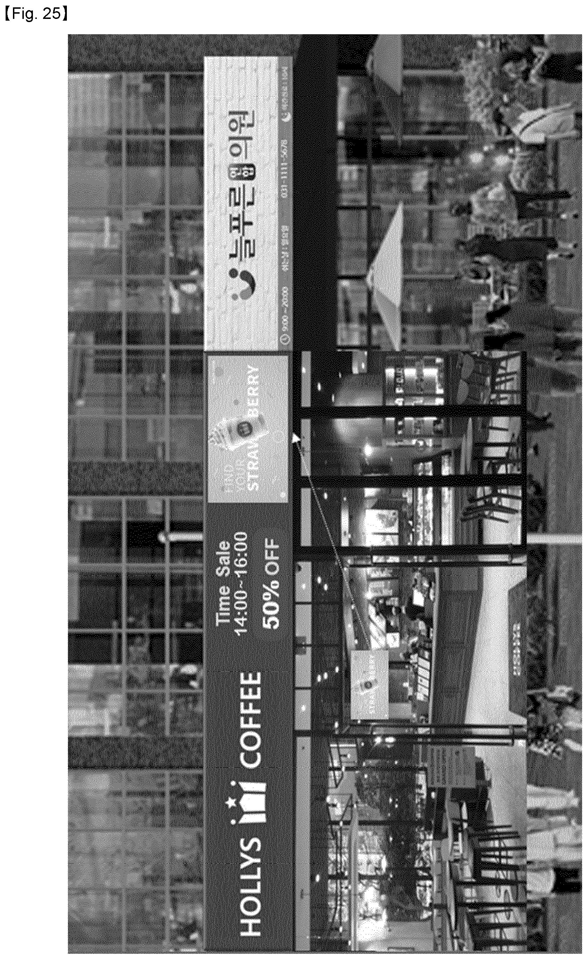

Figure 25 is an exemplary view of an interactive advertisement using a shared signboard according to some embodiments of the present invention.

In Figure 25, a specific advertisement, such as an hourly discount event, is shown in a predetermined section of the shared signboard. Compared to conventional notices such as posts and flyers, the shared signboard communicates the event information more effectively. The shared signboard allows the O2O marketing in which access to mobile applications in the user terminal is accomplished by the QR code contained in the advertising content displayed on the signboard, and the QR code and image taken from the advertising content displayed on the signboard is transmitted to the mobile application of the user terminal.

In this way, it is possible to obtain user's response to the advertisement simply by incorporating IT technology, provide an interactive advertisement by adjusting the display schedule of advertising content according to the trend of the user's response to the ad, process the response in real-time when receiving an order or a request for reservation in conjunction with a mobile application, and have the advantage of measuring the effect of the event.

Although not shown, one or more cameras can be installed in a predetermined area on the shared signboard to obtain information from potential customers watching signboard images or advertising content on the shared signboard. Interactive emotional communication with users, e.g., generating and displaying multimedia contents such as avatars and characters of passersby captured by the shared signboard cameras, may increase awareness of shared signboard services.

In addition, it may be configured to perform event marketing in the shared signboard, such as providing vacant seat information in real-time, displaying an offer of real-time group-buying such as discounts on filling the empty seats, and exhibiting a booking QR code to encourage potential customers to use the mobile application to take the QR code to access the store's homepage.

On the other hand, information obtained through various interactive communications such as the number of potential customers, advertisement viewing time, and advertising ratings can be used to reschedule advertising content, measure advertising effectiveness, set advertising fees, and distribute advertising fees.

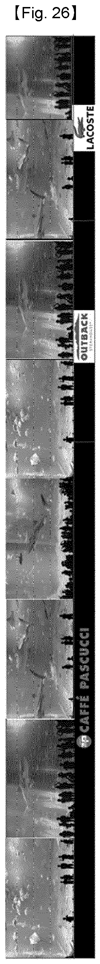

Figure 26 is an exemplary view of a cultural content advertisement using a shared signboard according to some embodiments of the present invention. The shared signboard of the present invention is configured to perform a public function to provide street culture content by displaying natural scenery, artworks, creative works, etc. Even while performing a kind of digital bulletin board function that displays cultural content, small signboard content of the stores occupying the shared signboard space can be displayed at the bottom of the shared signboard to give a chance to the passersby to pay attention to the store's signboard.

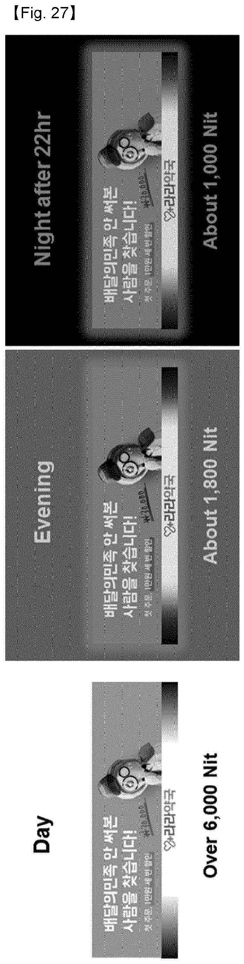

Figure 27 is an exemplary view of a shared signboard performing automatic time control of the luminance to increase user visibility according to some embodiments of the present invention. During the daytime, when the external light, such as sunlight, is intense, the content of the shared signboard is not well visible to the user due to the external light, so it may be configured to increase the luminance, and inversely lower the brightness somewhat during the evening hours. As a specific configuration for this purpose, it is possible to install an illuminance detection sensor to detect the illuminance near the shared signboard and adjust the luminance according to the detected illuminance value, or preset the luminance value by time and adjust the brightness of the shared signboard according to this setting.

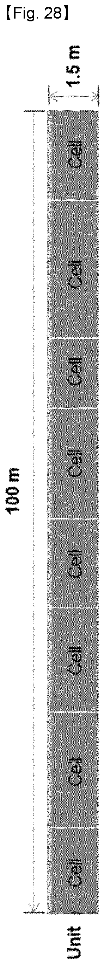

Figure 28 is an exemplary configuration of a shared signboard unit used in a shared signboard service system according to some embodiments of the present invention.

For example, the shared signboard unit (Unit) consists of an integral LED panel. The vertical height is set to the gap between building floors (1.5m), and the horizontal length is set to the width of the building. The shared signboard unit, made of a large LED display, may be composed of a plurality of small LED displays. The individually controllable and physically dividable display units are referred to as cells. One building may be equipped with a plurality of shared signboard units by floor or front and sidewalls. A shared signboard unit is referred to as a "Cell" in which the computer for controlling content independently controls the displayed content. One shared signboard unit is assigned one or more display controllers for display control by section. Here, the display controller controls the physical display and is independent of content control.

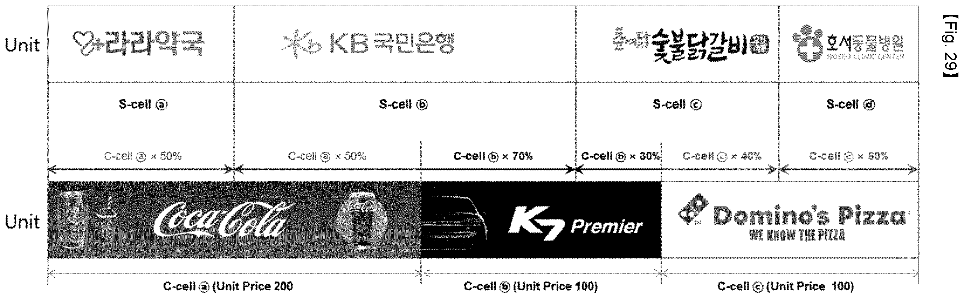

Figure 29 is an exemplary conceptual view of a fixed S-cell and a dynamic C-cell of a shared signboard unit according to some embodiments of the present invention.

In the present invention, there are S-cells and C-cells. They mean an aggregate of one or more cells distinguished from each other according to their functions. S-cell, an abbreviation for store cells, is a group of cells defining store-specific signboard area. In other words, the size of the physical space occupied by the signboard area for each store is the size of the store's S-cell. Each store will provide an S-cell section or S-cell area for shared signboard service. C-cell, an abbreviation for content cells, is a group of cells displaying advertising content. The size of the C-cell is dynamically determined according to the advertising area. The size of the C-cell is independent of the size of the physical space provided by each store and is determined only by the size of the advertising or posting content displayed.

In Figure 29, when four stores are placed on one side of the building, four S-cells correspond to the single shared signboard unit. Since S-cell is a store-specific signboard area, it is common for the size of the S-cell to be proportional to the size of the store, and it becomes the reference for displaying the signboard image during the signboard mode operation.

On the other hand, one or more C-cells are assigned without limit in number according to the number of advertising contents displayed in one shared signboard unit. Figure 14 illustrates C-cells of different sizes for displaying advertising content occupying corresponding areas.

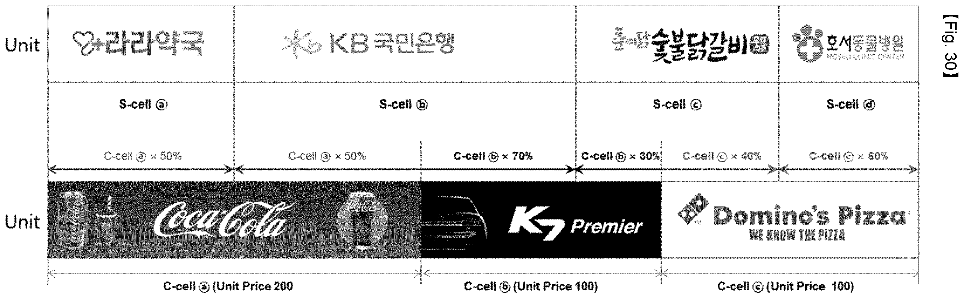

Figure 30 is an exemplary conceptual view of revenue distribution using the S-cell and C-cell of a shared signboard unit according to some embodiments of the present invention.

For example, if four S-cells (note: the size of each S-cell may be the same or different) are placed in one shared signboard unit and display three advertising contents, the number of C-cells is set to three. In this example, while only one advertising content relates to the S-cell ⓐ and the S-cell ⓓ, more than one advertising contents relate to the S-cell ⓑ and the S-cell ⓒ. Only a portion of the C-cell ⓐ is allocated to S-cell ⓐ. The rest of the C-cell ⓐ and a part of the C-cell ⓑ is assigned to the S-cell ⓑ. Similarly, the rest of the C-cell ⓑ and a part of the C-cell ⓒ are allocated to the S-cell ⓒ, and the rest ⓒ is given to the S-cell ⓓ.

[Table 1]

| S-cell | C-cell area / S-cell area | Reference fee for S-cell (unit: ten thousand KRW) | 20% distribution to each store (unit: ten thousand KRW) |
|---|---|---|---|
| S-cell ⓐ | 50% of C-cell ⓐ | 200*50%=100 | 100*20%=20 |
| S-cell ⓑ | (50% of C-cell ⓐ) + (70% of C-cell ⓑ) | (200*50%)+(100*70%)=170 | 170*20%=34 |
| S-cell ⓒ | (30% of C-cell ⓑ) + (40% of C-cell ⓒ) | (100*30%)+(100*40%)=70 | 70*20%=14 |
| S-cell ⓓ | 60% of C-cell ⓒ | 100*60%=60 | 60*20%=12 |

As described in Table 1, the advertising revenue allocation is determined by the proportion of the C-cell area assigned to each S-cell area. For example, suppose the advertising impression unit price of the C-cell ⓐ is two million KRW. In that case, 50% of the revenue is assigned to the S-cell ⓐ where 50% of the area of the C-cell ⓐ is allocated. The remaining 50% of the payment is assigned to the S-cell ⓑ where the remaining 50% of the C-cell ⓐ is allocated. Since the advertising impression unit price of C-cell ⓑ is one million KRW, 70% of the revenue is assigned to the S-cell ⓑ where 70% of the area of the C-cell ⓑ is allocated, and the remaining 30% of the payment is given to the S-cell ⓒ where the 30% of the size of the C-cell ⓑ is allocated.

Small businesses or self-employed people, who have the right to share profits as the occupant or owner of the S-cell, will receive a dividend for the advertisements displayed in its S-cell section, which may be determined by the total advertising revenue excluding the investment costs, operating costs, and predetermined profits of the shared signboard service provider.

The impression unit of advertisement is affected by the shared signboard's total size, the S-cell location, the advertising timeframe, event status, advertising ratings, etc. The S-cell with the same area may have different advertising revenue allocations, and the advertising revenue distribution may vary depending on the timeframe, even for the same S-cell.

Nevertheless, the method of distinguishing between fixed S-cells and dynamic C-cells as above, and distributing the advertising revenue generated by each timeframe in all C-cells to respective S-cell occupants according to the area ratio, has the advantage of automatically taking into account the factors affecting the advertising efficiency such as the location of the S-cell, the advertising timeframe, the effect of the event, etc., while technically automating the revenue distribution.

On the other hand, advertisers may enter into a shared advertising agreement by selecting only the size of the C-cell according to the adverting content and delegating the selection of S-cell on which the advertisement will be displayed to the shared signboard service provider. In contrast, the advertiser can specify in the agreement the location, the number, and the section of the S-cell(s) on which their advertisement will be placed. The option of selecting S-cell may be reflected in determining the advertisement impression unit price.

On the other hand, hourly advertising rating information by period is aggregated for each shared signboard unit to determine the advertising impression unit price. The shared operating server can provide the advertisement rating information to the advertiser terminal (not shown) and conduct an online auction for winning an advertising opportunity.

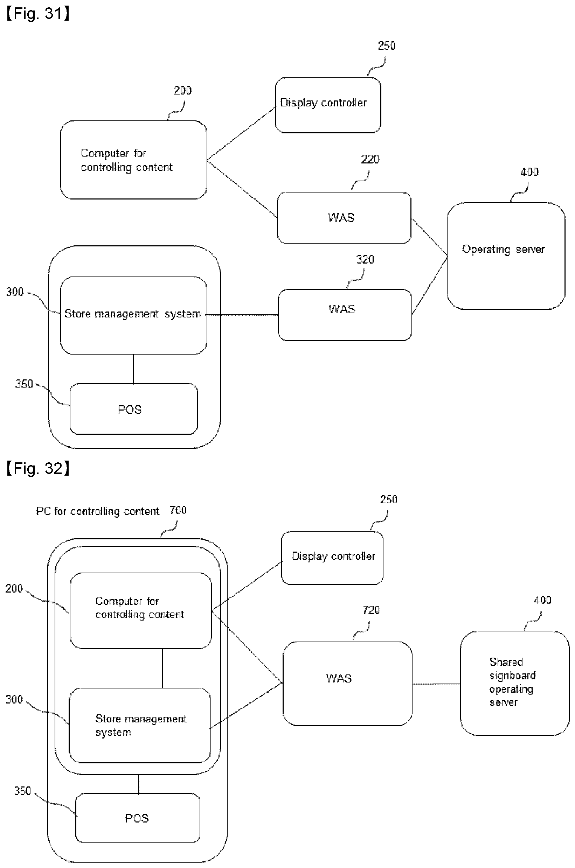

Figure 31 and Figure 32 show two different diagrams showing the interconnection between the computer for controlling content, a store management system and a shared signboard operating server of a shared signboard service system according to some embodiments of the present invention.

In Figure 31, the store management system 300 connected to the POS 350 of the store is allocated to each store and interconnected with the computer for controlling content 200 provided in each building or each floor of a building. Data transmission between the store management system 300 and the shared signboard operating server 400 is carried out through the computer for controlling content 200. The data of each store management system 300 required for a shared signboard service are stored and managed in the remote shared signboard operating server 400 and a database (not shown). The computer for controlling content 200 for performing the above function is a server-class computer, and the store management system 300 is preferably a personal PC provided at each store.

In contrast, in the case of Figure 32, both the computer for controlling content 200 and the store management system 300 are installed inside the PC for controlling content 700. Since the PC for controlling content 700 performs all functions of performing store management and managing and transmitting advertising content and display schedule data, there is no need to have a separate computer for controlling content on a building or floor basis (of course, it is possible to install and integrate additional servers for controlling content on a building or floor basis). Each store can display its advertising content directly on its signboard section. Each store can use the shared signboard more independently by converting the operating mode of shared signboard to advertising or bulletin board mode for displaying other's advertising content only during the timeframe agreed upon with the shared signboard service provider.

## Claims

1. A shared signboard service system, comprising:
one or more shared signboard units with a predetermined size corresponding to a plurality of individual signboards;
a computer for controlling content configured to store display content to be displayed on the shared signboard units and provide the content to the shared signboard units in accordance with a display schedule; and
a shared signboard operating server configured to store and edit the display schedule and the display content, including signboard content, advertising content, and bulletin board content, and transmit the edited display content and the display schedule to the computer for controlling content.

2. The shared signboard service system according to claim 1, further comprising:
an operating DB configured to manage various data used for the operation of the shared signboard service system, and
wherein the data includes data on the shared signboard unit, data on the physical installation location of shared signboard such as building data, wall data, floor data, and data on signboard space providers including occupant reference cell (S-cell) data, store owner (lessee) data, and building owner (lessor) data, and advertising content data Including advertising content reference cell (C-cell) data, advertiser data, advertising content data, advertiser campaign data, advertisement execution data, advertising account data and signboard price rating data.

3. The shared signboard service system according to claim 2, further comprising:
a store management system provided in each store that provides space to install the shared signboard unit, which is linked with a POS system in the store to transmit business status data required for the provision of shared signboard service to the shared signboard operating server, and
wherein the transmission of data between the store management system and the shared signboard operating server is performed through a web application server, and
wherein the data of the store management system required for the provision of the shared signboard service is managed by the shared signboard operating server.

4. The shared signboard service system according to claim 2, wherein:
the computer for the controlling content provided in each store that provides space to install the shared signboard unit, which is linked with a POS system in the store to generate and manage the store's own advertising content data and business status data required for the provision of shared signboard service and transmit the store's own advertising content data to the shared signboard operating server; and
the store's own advertising content data and business status data are managed in the computer for controlling content.

5. The shared signboard service system according to claim 2, wherein:
the shared signboard unit is a complex of a plurality of small display cells configured to control the displayed content independently;
the cells are distinguished by a fixed S-cell defined as a physical signboard area of each store and a dynamic C-cell defined in different sizes according to each ad as the area where the advertising content is displayed; and
the ad revenue allocation is determined by the proportion of the C-cell area assigned to each S-cell area.

6. The shared signboard service system according to claim 2, wherein:
the shared signboard ID system applied to the shared signboard unit is composed of building ID ⓐ, each wall ID ⓑ of the exterior wall of the building, ID ⓒ for distinguishing each floor of the building, ID ⓓ assigned to each shared signboard unit, and a separate non-installation ID ⓧ assigned to the building wall space where the shared signboard unit is not installed when the shared signboard unit is discontinuous or smaller than the width of the building.

7. The shared signboard service system according to claim 2, wherein:
the shared signboard unit alternately operates in digital signboard mode, digital advertising mode, and digital bulletin board mode;
the digital signboard mode is a mode for displaying the signboard of each store that provides space to install the shared signboard unit;
the digital advertising mode is a mode for displaying the store's own advertisements or signs or advertisements of other stores; and
the digital bulletin board mode is a mode for displaying public information.

8. The shared signboard service system according to claim 2, wherein:
the shared signboard unit is formed as being horizontally elongated, and the horizontal length corresponds to the width of the building.

9. The shared signboard service system according to claim 2, wherein:
the shared signboard units are installed in a plurality of separate buildings and interlinked to display advertising content or public information.

10. The shared signboard service system according to claim 9, wherein:
the buildings are placed along a road section or in a hot place.

11. The shared signboard service system according to claim 7, wherein:
small signboard information of each store that provided the space to install the shared signboard unit is displayed at a predetermined area of the shared signboard in the digital advertising mode or the digital bulletin board mode.

12. The shared signboard service system according to claim 11, wherein:
the small signboard information for each store is inserted into the displayed content in the form of a widget.

13. The shared signboard service system according to claim 2, wherein:
a franchise data system operating in connection with one or more stores is interconnected to a separate mobile application and the shared signboard operating server;
the advertisement on the mobile application is displayed on the shared signboard unit; and
the business status of the store is displayed on the shared signboard unit to induce purchase or reservation of product or service through the mobile application.

14. The shared signboard service system according to claim 2, wherein:
a franchise data system operating in connection with one or more stores is interconnected to a separate indoor display and the shared signboard operating server; and
the content on the indoor display is displayed on the shared signboard unit in real-time.

15. The shared signboard service system according to claim 13, wherein:
QR code is displayed in a predetermined area of the shared signboard unit; and
access to the mobile application becomes available through the shooting of the QR code.

16. The shared signboard service system according to claim 13, wherein:
the mobile application requests users to input information about a specific content portion displayed on the shared signboard unit; and
the mobile application responds to information input using a multimedia-related function of a user terminal.

17. The shared signboard service system according to claim 2, wherein:
one or more cameras are installed in at least a part of the shared signboard unit to generate multimedia content using the captured image of the passerby.

18. The shared signboard service system according to claim 2, wherein:
advertisement viewership is measured through interactive advertising performed by one or more cameras installed in a part of the shared signboard unit and a separate mobile application interworking with the shared signboard operating server.

19. The shared signboard service system according to claim 7, wherein:
a culture content is displayed in the digital bulletin board mode.

20. The shared signboard service system according to claim 2, wherein:
the luminance of the shared signboard unit is adjusted according to a preset value or changed depending on the ambient illuminance detected in real-time.
